# EUROPEAN PATENT APPLICATION

(11) **EP 2 135 732 A1**
(43) Date of publication of application: **23.12.2009**
(21) Application number: 07741665.9
(22) Date of filing: 10.04.2007
(51) Int. Cl.: B32B 5/18, B29C 47/04

(54) **LAMINATED FILM OR SHEET HAVING FOAMED RESIN LAYER AND PROCESS FOR PRODUCING THE SAME**

(71) Applicant: Du Pont-Mitsui Polychemicals Co., Ltd., Tokyo 105-7117 (JP)
(72) Inventor: SUZUKI, Naozumi, Ichihara-shi Chiba 290-0075 (JP); NOZAKI, Yoshio, Ichihara-shi Chiba 299-0102 (JP)
(74) Representative: Benson, John Everett
(86) International application number: PCT/JP2007/058229
(87) International publication number: WO 2008/129653

(57) **Abstract**

A foamed layer-laminated film or sheet having a foamed layer of a thermoplastic resin laminated on a base material such as a paper or PET, and is useful as a material for producing formed articles such as paper containers, aluminum foil containers, packing films and sheets for containing high-temperature foods, beverages and the like owing to its enhanced heat-insulating property. The foamed layer has innumerable fine elongated foamed cells, and local shades of distribution density of the cells create an appearance of vertical striped patterns on a frosted-glass-like translucent background lending the laminated film or sheet well for use as a material for ornamental articles. The invention further provides a process for easily producing the film or sheet maintaining good productivity at a low cost. The laminated film or sheet includes at least a base material and a thermoplastic foamed resin layer, the foaming layer being foamed at the time of extruding a thermoplastic resin composition containing a foaming agent so as to be laminated on the base material.

## Description

### Technical Field

This invention relates to a laminated film or sheet and a process for producing the same. More specifically, the invention relates to a laminated film or sheet having a particular thermoplastic foamed resin layer formed by foaming at the time of extrusion and lamination, and to a process for producing the same.

### Background Art

Containers, films or sheets made from such a base material as paper or polyester for containing or packing heated or cooled foods and beverages, have heretofore been frequently imparted with heat-insulating property by laminating and applying, onto the surface of the paper or the plastic base material, a foamed resin layer comprising, for example, a vinyl chloride resin, a polystyrene resin, a polyurethane resin or a polyolefin resin. In this connection, quite a lot of new production methods and improved inventions have already been proposed.

For example, JP-A-2003-341752 discloses a paper container obtained by preparing a blank sheet by punching a laminated sheet which comprises a paper base material, a polypropylene resin layer as the innermost layer and a layer of a low-density polyethylene that is the outermost layer which will turn into a foamed layer, forming the blank sheet into the shape of a container, and effecting the foaming in a heating furnace to form a foamed resin layer. JP-A-2001-270572 is disclosing a heat-insulating bag comprising a laminated sheet of a foamed polyethylene resin layer, a heat-melting polyethylene resin layer and a base material in this order from the inner surface toward the outer surface.

Further, JP-A-1999-129421 discloses a foamed laminated sheet forming a foamed layer of a synthetic resin composition comprising mainly an olefin type resin, wherein the synthetic resin is a resin composition obtained by mixing an ethylene/α-olefin copolymer polymerized by using a metallocene catalyst and at least one of a low-density polyethylene, a linear low-density polyethylene or an olefin type rubber, and wherein a synthetic resin layer that can be foamed comprising a synthetic resin composition obtained by adding a foaming agent to the above synthetic resin is laminated on a base material and is foamed by heating.

The laminated film or sheet obtained by laminating the above foamed resin layer on the base material, or a foamed article thereof, is, generally, formed into the shape of an article such as a container or a sheet, and is foamed by heating so as to form the foamed resin layer as is done by the invention of, for example, JP-A-2003-341752 or JP-A-1999-129421. Or, a sheet thereof that has been foamed already is laminated on a non-foaming resin layer or a base film by extrusion-lamination as is done by the invention of a method of producing a polypropylene resin-laminated foamed sheet disclosed in JP-A-2005-119147.

According to the above general methods, however, the resin is foamed in a step separate from a step of lamination, requiring correspondingly increased work and time, posing a problem from the standpoint of productivity.

An attempt to lower the production cost by rationalizing the above steps has been proposed already in a particular case, such as when the base material and the foamed layer both comprise thermoplastic resins that can be extrusion-formed, and are both made from nearly the same kinds of materials such as polyethylene resin. JP-A-2004-001401 discloses a cylindrically laminated foamed body having a resin layer laminated on at least one surface of a foamed layer by introducing a molten resin for forming a resin layer comprising a polyethylene resin composition and a resin composition for forming a foamed layer comprising a polyethylene resin composition into an annular die, and co-extruding them from the annular die.

However, the method of the above JP-A-2004-001401 cannot be employed when the resins constituting the base material and the foamed layer are not the same and, particularly, when the material of the base material is a paper or the like which is not a thermoplastic resin, or when the base material resin and the foamed resin layer cannot be co-extruded because of a great difference in the physical properties such as melting point even though they are made from the thermoplastic resins. Therefore, the above proposals cannot be said to sufficiently satisfy the demands that have heretofore been desired.

### Disclosure of the Invention

The present inventors have conducted extensive study in an effort to more widely satisfy the above demands, hit upon an idea of forming a foamed layer during the lamination operation in the extrusion-laminating apparatus while laminating a foaming agent-containing thermoplastic resin composition such as olefin polymer composition on a base material such as paper, aluminum foil or PET resin by using the extrusion-laminating apparatus, and have forwarded the study for embodying the idea.

As a result, the inventors have completed a method capable of obtaining a nearly satisfactory product except the case of forming a foamed layer having a particularly high foaming ratio or the case of conducting the method under the conditions of a particularly high working rate.

Unexpectedly, further, the inventors have discovered through the study the fact that the product, i.e., the laminated film or sheet having a foamed layer obtained by the method of the invention has innumerable fine elongated foamed cells in the foamed layer, that local shades of distribution density of the foamed cells create an appearance of vertical striped patterns on a frosted-glass-like translucent background, and that the laminated film or sheet can be sufficiently utilized for producing ornamental articles.

It is, therefore, an object of the present invention to provide a laminated film or sheet having a foamed layer laminated on a base material, useful as a material for producing paper containers, aluminum foil containers, packing films and sheets imparted with heat-insulating property, and a process for producing the laminated film or sheet with ease maintaining good productivity at a low cost.

Another object of the present invention is to provide a laminated film or sheet having innumerable fine elongated foamed cells, useful as a material for producing ornamental articles having a foamed layer laminated thereon creating an appearance of vertical striped patterns on a frosted-glass-like translucent background owing to its local shades of distribution density of cells, and a process for producing the laminated film or sheet with ease maintaining good productivity at a low cost.

According to the present invention, there is provided a laminated film or sheet including at least a base material and a thermoplastic foamed resin layer, wherein the foamed layer is foamed at the time of extruding a thermoplastic resin composition containing a foaming agent so as to be laminated on the base material.

The laminated film or sheet of the invention is a film or sheet that is foamed at the time of extruding and laminating the foaming agent-containing thermoplastic resin composition, and has a feature in that the foamed layer is formed simultaneously with when it is laminated on the base material.

Preferably, the foamed layer of the invention contains innumerable fine elongated foamed cells to impart a high heat-insulating property to the base material. More preferably, local shades of distribution density create an appearance of vertical striped patterns on a frosted-glass-like translucent background.

Therefore, the laminated film or sheet of the invention is not only useful as a material for producing paper contains, aluminum foil containers, packing films and sheets imparted with heat-insulating property necessary for containing high-temperature foods and beverages but also useful as a material for producing ornamental articles that require aesthetic appearance.

It is desired that the laminated film or sheet has at least one more layer of a thermoplastic resin containing no foaming agent laminated thereon. In particular, it is desired that the laminated film or sheet is formed by co-extruding at least one layer of the thermoplastic resin containing no foaming agent and the foaming agent-containing thermoplastic resin composition onto the base material.

From the standpoint of diversifying the patterns and protecting the patterns, further, an embodiment is particularly preferred in which the layer of the thermoplastic resin containing no foaming agent is a transparent layer or a colored layer, and is laminated on one surface side of the thermoplastic foamed resin layer.

It is, further, desired that the thermoplastic foamed resin layer has a foaming ratio of 1.2 to 5 times.

Further, it is particularly desired that the thermoplastic resin constituting the foamed layer comprises an ethylene polymer.

The invention is, further, concerned with a process for producing a laminated film or sheet comprising the steps of melt extruding a foaming agent-containing thermoplastic resin composition from a die of an extrusion-laminator, taking up the extruded molten web and the base material through a gap between a cooling roll and a nipping roll in such a manner that the one surface of the extruded molten web and the one surface of the base material are overlapped one upon the other, and heat-adhering and laminating the two, wherein the foaming agent-containing thermoplastic resin composition is foamed during a period of from when it has left the die until when it has passed through the gap between the cooling roll and the nipping roll to complete the formation of a foamed layer.

The invention, further, provides a process for producing a laminated film or sheet comprising the steps of melt-coextruding a foaming agent-containing thermoplastic resin composition and a resin or a resin composition containing no foaming agent from a die of a coextrusion-laminator, taking up the extruded molten web and the base material through a gap between a cooling roll and a nipping roll in a manner that the one surface of the extruded molten web and the one surface of the base material are overlapped one upon the other, and heat-adhering and laminating the two, wherein the foaming agent-containing thermoplastic resin composition is foamed during a period of from when it has left the die until when it has passed through the gap between the cooling roll and the nipping roll to complete the formation of a foamed layer.

According to the above methods of the invention, it is desired that the foamed layer is formed while adjusting the temperature for extruding the resin of the extrusion-laminator, the working rate, the air gap, and the gap length between the cooling roll and the nipping roll.

Further, it is desired that the adjustment is such that the temperature for extruding the resin is in a range of 150 to 300°C, the line speed of the extrusion-laminator is in a range of 5 to 150 m/min, the air gap is in a range of 50 to 150 mm, and the gap length between the cooling roll and the nipping roll is in a range of 0 to 2 mm.

As described above, the laminated film or sheet having a foamed layer of the invention is obtained by extruding the foaming agent-containing thermoplastic resin composition so as to be foamed and laminated on the base material, wherein the foamed layer is formed at the time of being laminated on the base material. The foamed layer contains innumerable fine elongated foamed cells so as to impart a high heat-insulating property to the base material. Desirably, further, local shades of distribution density thereof create an appearance of vertical striped patterns on a frosted-glass-like translucent background.

Therefore, the laminated film or sheet of the invention is not only useful as a material for producing paper contains, aluminum foil containers, packing films and sheets imparted with heat-insulating property necessary for containing high-temperature foods and beverages but also useful as a material for producing ornamental articles that require aesthetic appearance.

According to the process of the invention, further, the laminated film or sheet can be produced with ease maintaining good productivity at a low cost.

### Brief Description of the Drawings

Fig. 1 is a schematic view of an extrusion/foaming laminator for producing a laminated film or sheet of the invention; and
Fig. 2 shows a pattern appearing on the surface of a foamed layer of the laminated film or sheet of the invention.

### Best Mode for Carrying Out the Invention

An embodiment of the present invention will now be described in detail and concretely with reference to the drawings.

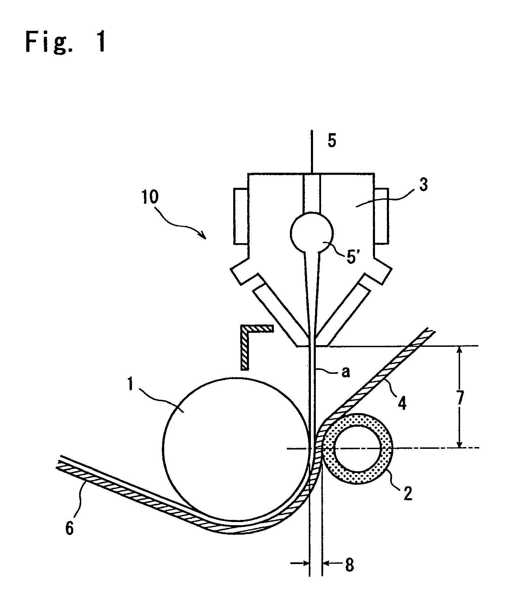

Fig. 1 shows an apparatus (extrusion-laminator) for producing a laminated film or sheet according to the present invention.

In an apparatus 10 of Fig. 1, reference numeral 1 denotes a cooling roll, 2 denotes a nipping roll, 3 denotes a T-die, 4 denotes a base material, 5 denotes a molten polymer flow passage in the die, 5' denotes a manifold, 6 denotes a laminated film, 7 denotes an air gap, 8 denotes a gap between the cooling roll 1 and the nipping roll 2, and "a" denotes a molten web that is traveling while being foamed.

To produce, for example, the laminated sheet of the invention by using the above apparatus 10, first, the base material layer 4 such as of a paper or PET is fed along the nipping roll 2, delivered into the gap 8 between the nipping roll 2 and the cooling roll 2, and is taken up along the cooling roll 1.

Here, a melt-kneaded foaming agent-containing polymer composition is extruded and flown down through the flow passage 5 in the T-die 3, spread in the manifold 5' to the whole width of the die, and is extruded out of the T-die 3 as the molten web a.

The molten web a extruded out of the T-die 3 readily starts foaming, sustains laminar foam while flowing down a distance of the air gap 7, arrives at the gap 8 between the nipping roll 2 and the cooling roll 1 and where the layer of the foamed and molten web a and the base material layer 4 are press-adhered together and at a moment after having passed through the gap, the foamed layer is formed and, at the same time, lamination of the base material layer and the foamed layer is completed. The thus laminated layers are taken up to obtain the laminated sheet.

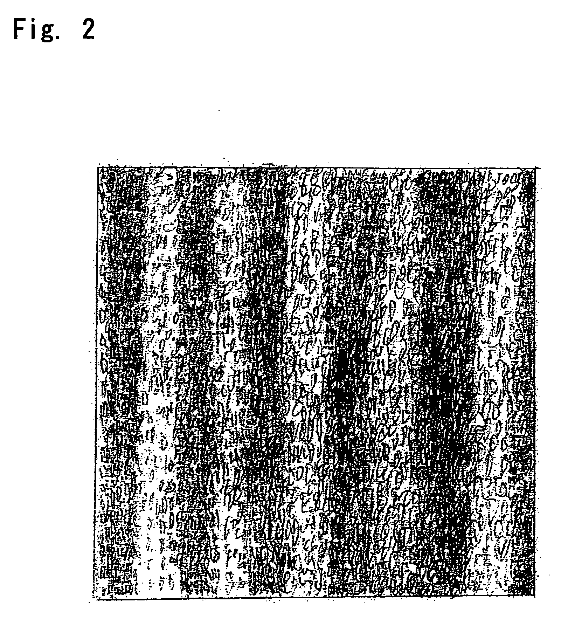

The foamed polymer layer in the thus obtained laminated sheet has innumerable elongated fine foamed cells, and the local shades of distribution density thereof create an appearance of vertical striped patterns on a frosted-glass-like translucent background as schematically shown in Fig. 2.

Therefore, the laminated sheet of the invention does not only merely exhibit excellent heat-insulating property but also exhibit aesthetic effect owing to the above pattern offering excellent ornamental appearance.

For example, when a laminated film or sheet of an embodiment, further, having a non-foamed resin layer laminated on the foamed layer is to be produced by coextrusion, the extrusion die portion 3 of the extrusion-laminator is replaced by a co-extrusion die, the foaming agent-containing resin composition is extruded from a flow passage on the side that comes in contact with the surface of the base material and the resin containing no foaming agent is extruded from the flow passage on the side separated away from the base material, and the molten web of the extruded foaming resin composition is foamed and is heat-adhered on its one surface to the base material and is heat-adhered on its other surface to the resin web containing no foaming agent so as to be laminated one upon the other.

It is desired that the foaming ratio in the foamed resin layer is 1.2 to 5 times and, more preferably, 1.5 to 4 times as great as the thickness of the layer in the non-foamed state from the standpoint of strength of the layer, uniform heat-insulating property and aesthetic effect such as patterned appearance.

As the base material used for the above laminated film or sheet of the invention, there can be used, without any particular limitation, a base material comprising a material having flexibility so as to be treated in the line of a working apparatus such as the extrusion-laminator and that can be heat-adhered to the foamed resin layer.

In the invention, preferred examples of the base material include polyester resins such as PET resin, polyamide resins such as nylon 6 resin, polyolefin resins such as polypropylene resin, metal foils such as aluminum foil, paper, nonwoven fabric and felt. Among them, the paper, PET and aluminum foil are particularly preferred.

It is further desired that the base material is stretched and oriented when it is a resin film or sheet such as of polyester resin or polyamide resin.

Next, as the thermoplastic resin used for the foaming agent-containing thermoplastic resin composition for forming the foamed layer of the invention, there can be used, without any particular limitation, a thermoplastic resin that has flexibility so as to be heat-adhered to the base material and is capable of forming a foamed film. As such a resin, there can be exemplified a polyester resin, a polyamide resin and a polyolefin resin. Among them, a polyolefin and, particularly, an ethylene polymer are preferred.

As the ethylene polymer, there can be exemplified polyethylenes such as high-density polyethylene, low-density polyethylene, straight chain low-density polyethylene and metallocene catalyst-polymerized straight chain low-density polyethylene, as well as an ethylene/α-olefin copolymer containing an ethylene as a main component, such as a copolymer of an ethylene and an α-olefin having 3 to 30 carbon atoms like propylene, 1-butene, 1-hexene, 1-octene, 1-decene, 1-dodecene or 4-methyl-1-pentene; an ethylene/unsaturated carboxylic acid copolymer containing an ethylene as a chief component or an ethylene/unsaturated carboxylic acid ester copolymer, such as a copolymer of an ethylene and an unsaturated carboxylic acid like acrylic acid, methacrylic acid, ethacrylic acid, fumaric acid, maleic acid, monoalkyl maleate or maleic anhydride; and a copolymer of an ethylene and an unsaturated carboxylic acid ester like alkyl acrylate ester, alkyl methacrylate ester, alkyl ethacrylate ester, dialkyl fumarate ester or dialkyl maleate ester.

As the alkyl ester, there can be preferably exemplified methyl ester, ethyl ester, n-butyl ester, iso-butyl ester, 2-ethylhexyl ester and iso-octyl ester.

As the ethylene copolymer, further, there can be exemplified a terpolymer comprising an ethylene, the above unsaturated carboxylic acid and the unsaturated carboxylic acid ester, such as ethylene/unsaturated carboxylic acid/unsaturated carboxylic acid ester terpolymer; a zinc or alkali metal ionomer of the ethylene/unsaturated carboxylic acid copolymer or the ethylene/unsaturated carboxylic acid/unsaturated carboxylic acid ester terpolymer; and ethylene polymers such as ethylene/vinyl acetate copolymer and partly saponified product thereof, ethylene/vinyl propionate copolymer and partly saponified product thereof, and polyvinyl alcohol.

Further, a resin composition of a mixture of two or more kinds of the above polymers can be used.

Among them, there can be preferably used low-density polyethylenes such as low-density polyethylene produed by hight pressure polymerization, straight chain low-density polyethylene and metallocene catalyst-polymerized straight chain low-density polyethylene; ethylene/unsaturated carboxylic acid copolymers such as ethylene/ (meth) acrylic acid copolymer; and ionomers such as alkaline earth metals or alkali metal ionomers of ethylene/(meth)acrylic acid copolymer. Among them, particularly preferred polymers are zinc ionomer, sodium ionomer and potassium ionomer of ethylene/ (meth) acrylic acid copolymer. Most desired examples include zinc ionomer, sodium ionomer and potassium ionomer having a degree of neutralization of not less than 20 mol% of ethylene/(meth)acrylic acid copolymer containing (meth)acrylic acid in an amount of 5 to 30% by weight.

There is no particular limitation on the foaming agent to be added to the polymer composition provided it can be homogeneously dispersed and mixed in the polymer resin, and undergoes the foaming in the polymer composition at a melting temperature of the composition or near the melting temperature thereof. It is, however, desired to select a suitable foaming agent by taking into consideration the melting temperature of the polymer, melt viscosity and other physical properties.

Representative examples of the inorganic foaming agent that can be used in the invention may include sodium bicarbonate, ammonium bicarbonate and ammonium carbonate. Examples of the organic foaming agent include N,N'-dinitroso/pentamethylene/tetramine (DPT), azodicarbonamide (ADCA), azobis·isobutylonitrile, benzene· sulfonyl·hydrazide, 4,4'-oxybis(benzenesulfonyl hydrazide), toluene·sulfonyl·hydrazide, p-toluene·sulfonyl·semicarbazide, and barium·azodicarboxylate.

Further, the so-called water foaming can be employed by utilizing water (water vapor). As the foaming agent, there can be used water, crystal water-containing inorganic matter, and hygroscopic resin (potassium ionomer, etc.).

The foaming agent has been placed in the market as a master batch (e.g., Polythlene EE produced by Eiwa Chemical Ind. Co. , LTD.) by being mixed in small amounts and homogeneously into the polymer which is the same as or similar to the polymer constituting the foamed resin layer, such as polyethylene being, further, blended, as required, with an additive such as a foaming assistant. Its use offers convenience.

The ratio of adding the foaming agent to the ethylene polymer composition may vary depending upon the kinds of the foaming agent and the polymer that are used, thickness of the foamed layer that is formed, and the foaming ratio, and is suitably determined by taking them into account. Usually, however, the foaming agent is added in an amount of 100 ppm to 30% by weight per 100 parts by weight of the resin. For example, if the polymer is a zinc ionomer of ethylene/methacrylic acid copolymer, the thickness of the foamed layer is about 100 µm and the foaming ratio is about 2 times, then the Polythlene EE205D (20% concentration based on Polyethylene, carbonic acid gas-forming inorganic foaming agent) is, usually, used in an amount of about 2 to 5 parts by weight per 100 parts by weight of the composition.

In addition to the basic laminated structure in which the foamed resin layer is formed on one surface of the base material as described above, the laminated film or sheet of the invention may assume an embodiment in which the foamed layers are laminated on both surfaces of the base material or, conversely, an embodiment in which the foamed resin layer is sandwiched between the two pieces of the base material.

Further, one or more resin layers containing no foaming agent may be laminated on the above laminate. There is no particular limitation on the resin that can be used as the resin layer containing no foaming agent provided it can be laminated on the base material or on the foamed resin layer. Concretely, there can be used the same resins as those used for the foamed layer.

Particularly, it is desired to select a resin that can be heat-adhered to the resin in a range of melting point in which it can be co-extruded together with the foaming agent-containing resin composition.

For example, a preferred embodiment has at least one more layer of an ethylene polymer containing no foaming agent that is laminated.

For example, the layer of ethylene polymer containing no foaming agent may be laminated on the surface of the foamed polymer layer of the above basic laminated structure and, further, the layer of ethylene polymer containing no foaming agent is laminated on the surface of the base material of the laminate of the above structure.

Among them, in particular, the thermoplastic resin layer containing no foaming agent is a transparent layer or a colored layer, and an embodiment in which a resin layer containing no foaming layer (hereinafter often referred to as resin layer) is laminated on one surface of the foamed layer which comprises the thermoplastic resin composition, is preferred from the standpoint of protecting the surface of the foamed layer from wear and damage and offering a variety of ornamental effects owing to the foamed layer of the invention.

Described below are representative examples of layer constitution of the laminated film or sheet of the invention.
1) Foamed layer/base material,
2) (Transparent) resin layer/foamed layer/base material,
3) Foamed layer/base material/resin layer,
4) Foamed layer/resin layer/base material,
5) (Transparent) resin layer/foamed layer/base material/resin layer,
6) (Transparent) resin layer/foamed layer/resin layer/base material/resin layer.

The base material, foamed layer and (non-foamed) resin layer in the laminated film or sheet of the invention have no particular limitation on the thickness thereof, and can be suitably selected and determined by taking the layer constitution of the laminated film or sheet, use thereof and other conditions into consideration. It is, however, desired that the base material has a thickness of, generally, about 5 to about 1000 µm and, particularly, 10 to 500 µm, and the foamed layer has a thickness of, generally, about 5 to about 1000 µm and, particularly, 10 to 500 µm though it may vary over a considerable range depending upon the foaming ratio, etc.

The thickness of the non-foamed resin layer is suitably determined depending on the object of lamination but is, usually, about 3 to about 100 µm.

When the laminated film or sheet has a basic layer constitution comprising a foamed layer and a base material, the apparatus for producing the laminated film or sheet of the invention may be an extrusion-laminator which includes an extruder with a die, a cooling roll and a nipping roll as shown in Fig. 1 and is, generally, used for laminating a resin on the base material of paper or PET. From the standpoint of laminating the foamed resin layer, however, the gap between the cooling roll and the nipping roll is set to be slightly wider than that of the case of laminating the non-foamed resin layer.

Further, when the laminated film or sheet of the embodiment comprising the foamed layer, non-foamed layer and base material is to be produced by co-extrusion, use is made of the extrusion-laminator of which the die portion has a co-extrusion die structure.

In the method of producing the laminated film or sheet of the invention by using the above apparatus, the timing for forming the foamed layer is adjusted by chiefly adjusting the temperature for extruding the resin, line speed (take-up speed) of the extrusion-laminator, air gap, and gap between the cooling roll and the nipping roll.

These adjustments are suitably done by taking into consideration the base material of the laminated film or sheet to be produced, sizes such as the thickness and width thereof, kinds of the polymer and the foaming agent of the foamed layer, foaming ratio, thickness of the layer and the like. Generally, however, it is desired that the resin is extruded at a temperature in a range of 150 to 300°C, the extrusion-laminator line speed at a rate in a range of 5 to 150 m/min, the air gap is in a range of 50 to 150 mm, and the gap length between the cooling roll and the nipping roll is in a range of 0 to 2 mm and, more preferably, 0.05 to 1 mm.

### Examples

The invention will now be concretely described by way of the following examples which, however, are in no way to limit the invention.

### [Example 1]

Use was made of a coextrusion-laminator by replacing the die portion of the extrusion-laminator shown in Fig. 1 by a coextrusion die (extruder: diameter 65 mmϕ, die: 850 mm wide, cooling roll 600 mmϕ, nipping roll 250 mmϕ) while setting the gap between the cooling roll and the nipping roll of the apparatus to be about 0.1 mm and the air gap to be 110 mm, respectively.

There were, further, provided a PET film (12 mm thick, 500 mm wide, surface on the laminated side being treated with corona) as the base material, and a zinc ionomer of an ethylene/methacrylic acid copolymer (Himilan 1650 produced by DuPont-Mitsui Polychemicals Co.,LTD.) to which a foaming agent (master batch of a concentration of 20% based on a polyethylene, foamed with carbonic acid gas: Polythlene EE205D produced by Eiwa Chemical Ind. Co.,LTD) was added at a ratio of 97.5/2.5 (weight ratio) as resin composition for forming a foamed layer, and a zinc ionomer of the ethylene/methacrylic acid copolymer (Himilan 1650)(resin containing no foaming agent).

They were filled in the predetermined filling places of the coextrusion-laminator so that the laminate constitution was the base material/foamed layer/resin layer (containing no foaming agent). The resin composition for forming the foamed layer and the resin (containing no foaming agent) were coextruded each maintaining a thickness of 20 µm under the conditions of a resin temperature of 260°C and line speed of 40 m/min in order to conduct the extrusion, foaming and lamination.

The obtained laminated film (product of Example 1) possessed a thickness of the foamed layer of 90 µm, a foaming ratio of 2.3 times, exhibited favorably foamed state, possessed innumerable fine elongated foamed cells, and offered an appearance of vertical striped patterns on a frosted-glass-like translucent background as shown in Fig. 2.

The laminated film possessed a thermal conductivity of 0. 098 (W/m · K). The thermal conductivity was tested in a manner as described below.

### Testing conditions:

Testing device: GH-1 (manufactured by Ulvac Riko Co.)
Measuring method: Steady-state calorimetric method
Measuring temperature: 25°C
Sample size: 50 φ x sample thickness

### [Examples 2 to 4]

The extrusion, foaming and lamination were conducted in the same manner as in Example 1 but changing the line speed, roll gap, and co-extruding thickness of the resin composition for forming foamed layer and the resin containing no foaming agent in Example 1 into the conditions shown in Table 1.

The results were as shown in Table 1.

### [Example 5]

Use was made of an extrusion-laminator shown in Fig. 1 (extruder: port diameter 65 mmϕ, die: 850 mm wide, cooling roll 600 mmϕ, nipping roll 250 mmϕ) while setting the gap between the cooling roll and the nipping roll of the apparatus to be about 0.1 mm and the air gap to be 110 mm. There were provided a PET film (12 mm thick, 500 mm wide, surface on the laminated side being treated with corona) as the base material, and a zinc ionomer of an ethylene/methacrylic acid copolymer (Himilan 1650, MFR (JIS K-7210): 1.5 g/10 min, density 950 kg/m³) to which a foaming agent (Polythlene EE205D) was added at a ratio of 99/1.0 (weight ratio) as resin composition for forming a foamed layer.

They were filled in the predetermined filling places of the extrusion-laminator, and the resin composition for forming the foamed layer was extruded alone maintaining a thickness of 20 µm under the conditions of a resin temperature of 260°C and line speed of 80 m/min in order to conduct the extrusion, foaming and lamination.

The obtained laminated film (single layer extrusion) was evaluated in the same manner as in Example 1 to obtain the results as shown in Table 1.

### [Example 6]

The extrusion, foaming and lamination were conducted in the same manner as in Example 1 but changing the resin composition for forming the foamed layer into a composition of a zinc ionomer of an ethylene/methacrylic acid copolymer (Himilan 1650) to which a potassium ionomerof an ethylene/methacrylic acid copolymer (methacrylic acid content of 15% by weight) having a degree of neutralization of 85 mol% was added at a ratio of 7/3 (weight ratio) to effect the foaming with water, setting the resin temperature to be 280°C, line speed to be 20 m/min, and setting the co-extruded thickness of the resin composition for forming the foamed layer and the ionomer resin containing no foaming agent to be 40 µm, respectively. The obtained laminated film was evaluated in the same manner as in Example 1.

The results were as shown in Table 1.

### [Example 7]

The extrusion, foaming and lamination were conducted in the same manner as in Example 1 but changing the resin composition for forming the foamed layer of Example 1 into the zinc ionomer of the ethylene/methacrylic acid copolymer (Himilan 1650) to which the foaming agent (Polythlene EE205D) was added at a ratio of 95/5.0 (weight ratio). The obtained laminated film was evaluated in the same manner as in Example 1. The results were as shown in Table 1.

### [Example 8]

The extrusion, foaming and lamination were conducted in the same manner as in Example 7 but changing the layer constitution into a base material/resin layer/foamed layer, and the obtained laminated film was evaluated in the same manner as in Example 1. The results were as shown in Table 1.

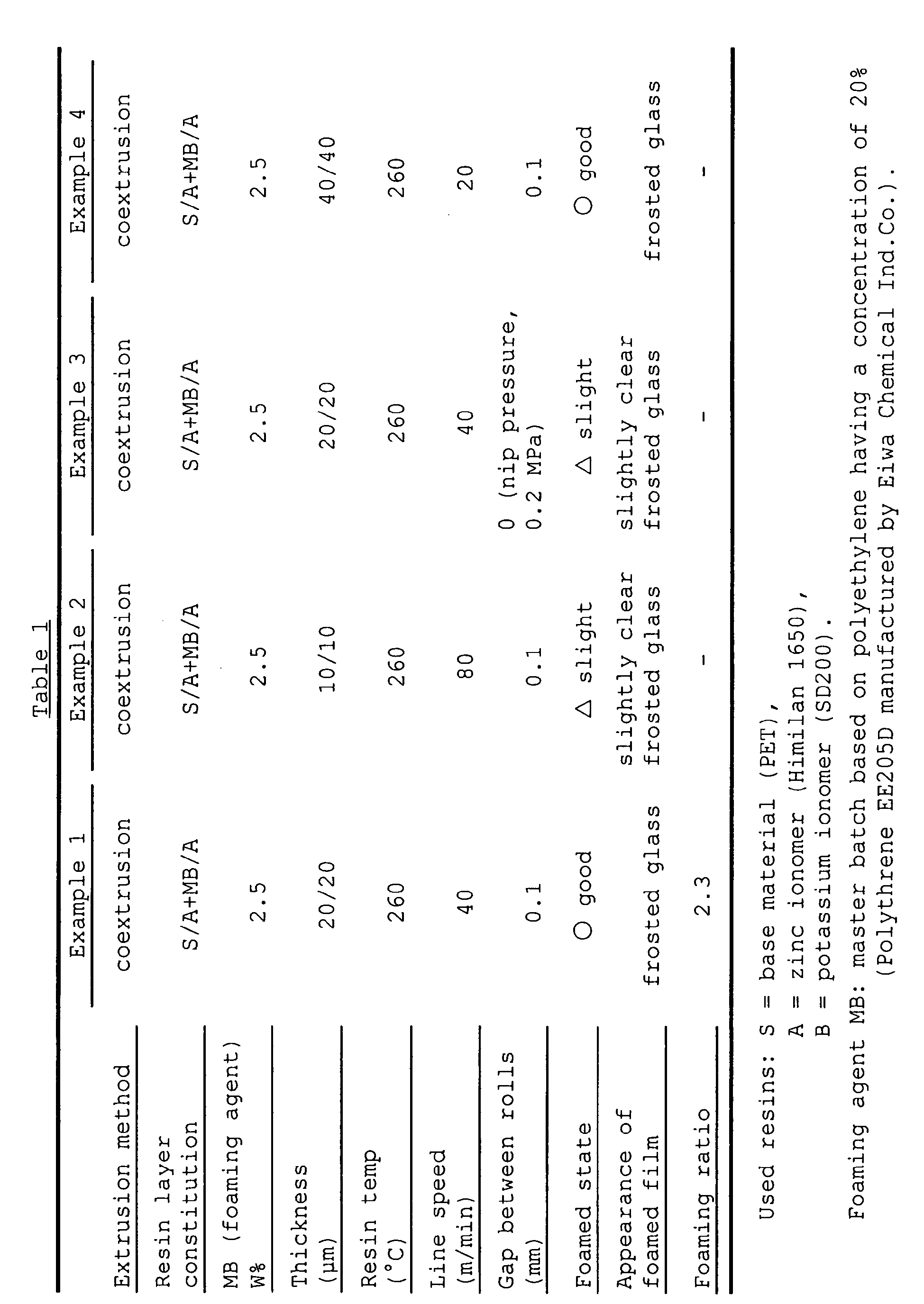

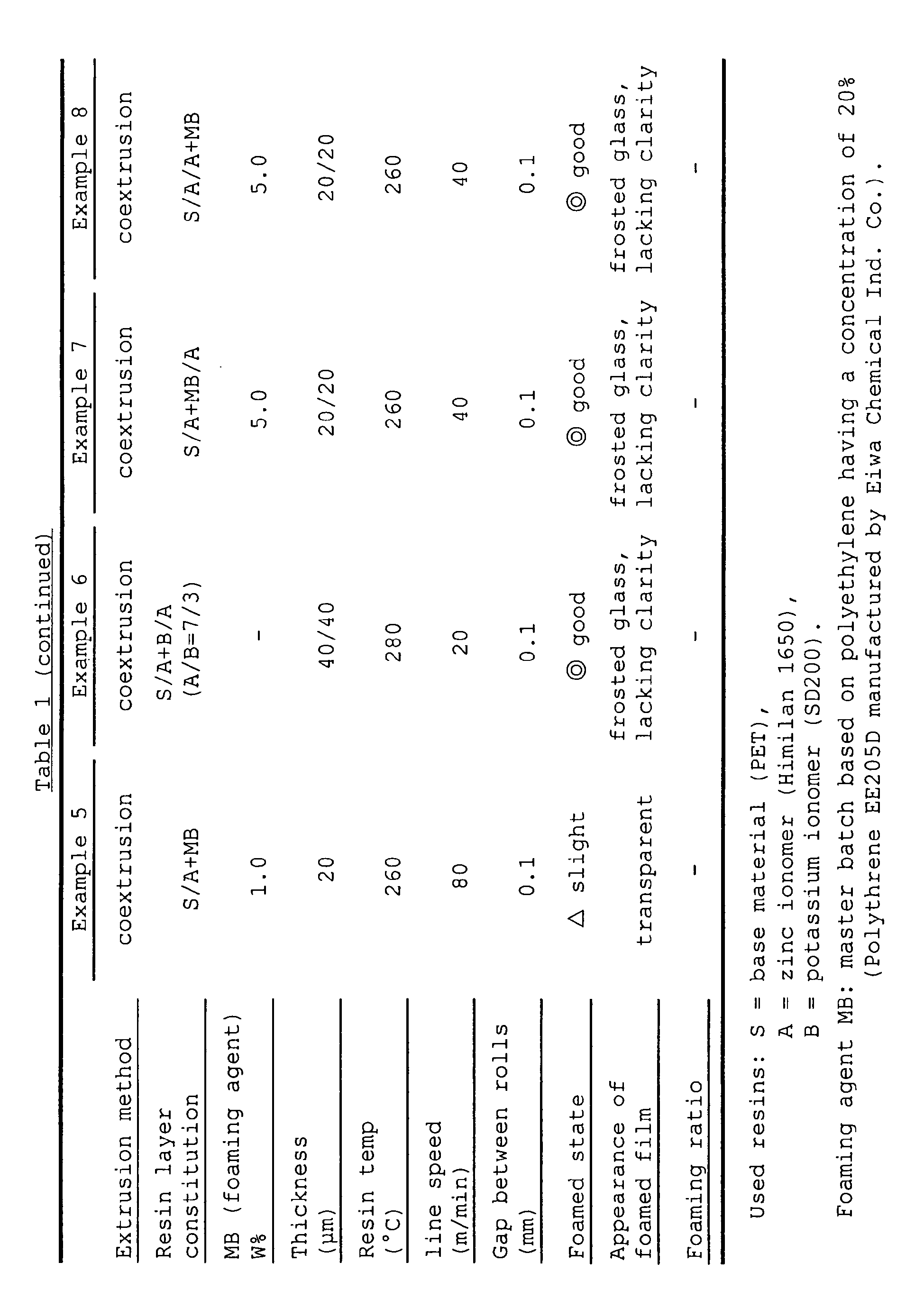

## Claims

1. A laminated film or sheet including at least a base material and a thermoplastic foamed resin layer, wherein said foamed layer is foamed at the time of extruding a thermoplastic resin composition containing a foaming agent so as to be laminated on the base material.

2. The laminated film or sheet according to claim 1, wherein at least one more layer of a thermoplastic resin containing no foaming agent is laminated thereon.

3. The laminated film or sheet according to claim 2, wherein said laminated film or sheet is formed by coextruding at least one layer of the thermoplastic resin containing no foaming agent and said foaming agent-containing thermoplastic resin composition onto the base material.

4. The laminated film or sheet according to any one of claims 1 to 3, wherein said thermoplastic foamed resin layer has a foaming ratio of 1.2 to 5 times.

5. The laminated film or sheet according to any one of claims 1 to 4, wherein the thermoplastic resin constituting said foamed layer comprises an ethylene polymer.

6. The laminated film or sheet according to any one of claims 1 to 5, wherein said foamed layer contains innumerable fine elongated foamed cells, and local shades of dispersion density of the foamed cells create an appearance of vertical striped patterns on a frosted-glass-like translucent background.

7. The laminated film or sheet according to claim 6, wherein the layer of the thermoplastic resin containing no foaming agent is a transparent layer or a colored layer, and is laminated on one surface side of said thermoplastic foamed resin layer.

8. A process for producing a laminated film or sheet comprising the steps of melt-extruding a foaming agent-containing thermoplastic resin composition from a die of an extrusion-laminator, taking up the extruded molten web and the base material through a gap between a cooling roll and a nipping roll in such a manner that the one surface of the extruded molten web and the one surface of the base material are overlapped one upon the other, and heat-adhering and laminating the two, wherein said foaming agent-containing thermoplastic resin composition is foamed during a period of from when it has left the die until when it has passed through the gap between the cooling roll and the nipping roll to complete the formation of a foamed layer.

9. A process for producing a laminated film or sheet comprising the steps of melt-coextruding a foaming agent-containing thermoplastic resin composition and a resin or a resin composition containing no foaming agent from a die of a coextrusion-laminator, taking up the extruded molten web and the base material through a gap between a cooling roll and a nipping roll in a manner that the one surface of the extruded molten web and the one surface of the base material are overlapped one upon the other, and heat-adhering and laminating the two, wherein said foaming agent-containing thermoplastic resin composition is foamed during a period of from when it has left the die until when it has passed through the gap between the cooling roll and the nipping roll to complete the formation of a foamed layer.

10. The method according to claim 8 or 9, wherein said foamed layer is formed while adjusting the temperature for extruding the resin of the extrusion-laminator, the working rate, the air gap, and the gap length between the cooling roll and the nipping roll.

11. The method according to claim 10, wherein the temperature for extruding the resin is in a range of 150 to 300°C, the line speed of the extrusion-laminator is in a range of 5 to 150 m/min, the air gap is in a range of 50 to 150 mm, and the gap length between the cooling roll and the nipping roll is in a range of 0 to 2 mm.
